# EUROPEAN PATENT APPLICATION

(11) **EP 4 636 440 A1**
(43) Date of publication of application: **22.10.2025**
(21) Application number: 22968159.8
(22) Date of filing: 14.12.2022
(51) Int. Cl.: G01S 19/46

(54) **POSITIONING DATA COLLECTION METHOD AND APPARATUS**

(71) Applicant: Beijing Xiaomi Mobile Software Co., Ltd., Beijing 100085 (CN)
(72) Inventor: MU, Qin, Beijing 100085 (CN)
(74) Representative: Dehns Germany Partnerschaft mbB
(86) International application number: PCT/CN2022/139068
(87) International publication number: WO 2024/124449

(57) **Abstract**

Disclosed in embodiments of the present disclosure are a positioning data collection method and apparatus, applicable to a new radio (NR) system. The method comprises: a terminal device sends a sounding reference signal (SRS) to a base station, the SRS being used for assisting the base station in collecting an SRS measurement signal; the terminal device collects positioning coordinates of the terminal device within a first time unit after sending the SRS; and the terminal device sends the positioning coordinates to a network side device. By implementing the embodiments of the present disclosure, the collected SRS measurement signal and the collected positioning coordinates can be ensured to be synchronous in time, and therefore, using the SRS measurement signal and the positioning coordinates which are synchronous in time as training data to train an artificial intelligence (AI) based positioning model can ensure the reliability of training data, thereby improving the model training effect.

## Description

### TECHNICAL FIELD

The present disclosure relates to the field of communication technology, and in particular, to a method of acquiring positioning data and a device thereof.

### BACKGROUND

Supporting various positioning techniques to provide an accurate and reliable user equipment (UE) location is one of the key areas of 3GPP (3rd Generation Partnership Project) standards. The 3GPP has completed a first standard release for positioning a UE based on a New Radio (NR) signal in Rel-16. In some scenarios (e.g., an industrial scenario), there is a high requirement for positioning accuracy, but in such scenarios, the positioning accuracy is often affected by a high number of non-line-of- sights. Therefore, an artificial intelligence (AI)-based positioning enhancement is proposed in Rel-18 of the 3GPP, in which a measurement signal of an acquired sounding reference signal (SRS) is used as a model input, and an acquired positioning coordinate is used as a label to train an AI-based positioning model, which is used to achieve positioning.

However, in some scenarios, the acquisition of the measurement signal of the SRS and the acquisition of the positioning coordinate are not at a same node. However, when the acquisition of the model input and the acquisition of the label are at different nodes during the acquisition of data, this usually results in the measurement signal of the acquired SRS and the positioning coordinate being out of sync in time, thereby affecting the training effect of the AI-based positioning model and the positioning accuracy of the model.

### SUMMARY

Embodiments of the present disclosure provide a method of acquiring positioning data and a device thereof, which may be applied to Internet of Vehicles, such as vehicle to everything (V2X) communication, long term evolution-vehicle (LTE-V), vehicle to vehicle (V2V) communication, or the like, or may be applied in the fields of intelligent driving, intelligent networked vehicles, or the like. A positioning coordinate of a terminal is acquired by the terminal within a first time unit after the terminal sends a sounding reference signal (SRS) to a base station, so that the time when the terminal sends the SRS is consistent with the time when the terminal acquires the positioning coordinate, thereby ensuring that a measurement signal of the SRS and the positioning coordinate acquired by the network device are time-synchronized. Therefore, the time-synchronized measurement signal of SRS and positioning coordinate may be used as training data for training an artificial intelligence (AI)-based positioning model, which may ensure the reliability of the training data, and thus enhance the training effect of the model and improve the positioning accuracy of the model.

In a first aspect, an embodiment of the present disclosure provides a method of acquiring positioning data, which is performed by a terminal, including:
sending a sounding reference signal (SRS) to a base station, the SRS being configured for the base station to acquire a measurement signal of the SRS;
acquiring a positioning coordinate of the terminal within a first time unit after sending the SRS; and
sending the positioning coordinate to a network device.

In this solution, the positioning coordinate of the terminal is acquired by the terminal within the first time unit after the terminal sends the sounding reference signal (SRS) to the base station, so that the time when the terminal sends the SRS is consistent with the time when the terminal acquires the positioning coordinate, thereby ensuring that the measurement signal of the SRS and the positioning coordinate acquired by the network device are time-synchronized. Therefore, the time-synchronized measurement signal of SRS and positioning coordinate may be used as the training data for training an artificial intelligence (AI)-based positioning model, which may ensure the reliability of the training data, and thus enhance the training effect of the model and improve the positioning accuracy of the model.

In an implementation, sending the SRS to the base station includes: receiving data collection configuration information sent by the network device, wherein the data collection configuration information includes a relevant parameter for determining a transmission resource and a transmission time for the SRS; and sending the SRS to the base station over the transmission resource according to each transmission time.

In a possible implementation, sending the positioning coordinate to the network device includes: adding a corresponding first identifier to the positioning coordinate, the first identifier having a mapping relationship with a second identifier corresponding to the measurement signal, and the second identifier being an identifier added by the base station to the measurement signal, wherein the first identifier and the second identifier are configured for the network device to pair the measurement signal and the positioning coordinate; and sending the positioning coordinate and the first identifier to the network device.

In a possible implementation, acquiring the positioning coordinate of the terminal within the first time unit after sending the SRS includes: acquiring the positioning coordinate of the terminal within the first time unit after sending the SRS of a first transmission time, and sending the positioning coordinate to the network device includes: sending the positioning coordinate corresponding to the SRS of the first transmission time to the network device after sending the SRS of the first transmission time.

In another possible implementation, sending the positioning coordinate to the network device includes: sending, in a first order, the positioning coordinate corresponding to the SRS of each transmission time to the network device.

In a possible implementation, sending, in the first order, the positioning coordinate corresponding to the SRS of each transmission time to the network device includes: sorting the positioning coordinate corresponding to the SRS of each transmission time in a chronological order of each transmission time, and sending the sorted positioning coordinates together to the network device; or sequentially sending the positioning coordinate corresponding to the SRS of each transmission time to the network device in the chronological order of each transmission time.

In a possible implementation, the first time unit is a time unit configured by the network device, and the data collection configuration information further includes the first time unit; or the first time unit is a time unit predefined by a protocol.

In a second aspect, an embodiment of the present disclosure provides another method of acquiring positioning data, which is performed by a base station, including:
receiving a sounding reference signal (SRS) sent by a terminal, the SRS being configured for the terminal to acquire a positioning coordinate of the terminal within a first time unit after sending the SRS;
obtaining a measurement signal of the SRS by measuring the SRS, and storing the measurement signal; and
sending the stored measurement signal to a core network device, wherein the measurement signal is configured for the core network device to acquire the positioning data, and the positioning data includes the measurement signal acquired by the base station and the positioning coordinate acquired by the terminal.

In this solution, the positioning coordinate of the terminal is acquired by the terminal within the first time unit after the terminal sends the sounding reference signal (SRS) to the base station, so that the time when the terminal sends the SRS is consistent with the time when the terminal acquires the positioning coordinate, thereby ensuring that the measurement signal of the SRS and the positioning coordinate acquired by the network device are time-synchronized. Therefore, the time-synchronized measurement signal of SRS and positioning coordinate may be used as the training data for training an artificial intelligence (AI)-based positioning model, which may ensure the reliability of the training data, and thus enhance the training effect of the model and improve the positioning accuracy of the model.

In an implementation, the method further includes: sending data collection configuration information to the terminal, wherein the data collection configuration information includes a relevant parameter for determining a transmission resource and a transmission time for the SRS, and the transmission resource and the transmission time are configured to instruct the terminal to send the SRS over the transmission resource according to each transmission time.

In a possible implementation, obtaining the measurement signal of the SRS by measuring the SRS, and storing the measurement signal includes: determining configuration information configured for the base station, the configuration information being configured to instruct the base station to measure the SRS and to store the measurement signal of the SRS; and obtaining the measurement signal of the SRS by measuring the SRS and storing the measurement signal based on the configuration information.

In an implementation, sending the stored measurement signal to the core network device includes: adding a corresponding second identifier to the stored measurement signal; receiving the positioning coordinate and a first identifier corresponding to the positioning coordinate sent by the terminal, wherein the first identifier and the second identifier have a mapping relationship, and the first identifier is an identifier added by the terminal to the positioning coordinate; pairing the measurement signal and the positioning coordinate corresponding to each other according to the first identifier and the second identifier; and sending the measurement signal and the positioning coordinate paired with each other to the core network device.

In another implementation, sending the stored measurement signal to the core network device includes: adding a corresponding second identifier to the stored measurement signal; receiving the positioning coordinate and a first identifier corresponding to the positioning coordinate sent by the terminal; and sending the stored measurement signal, the second identifier of the stored measurement signal, and the positioning coordinate and the first identifier of the positioning coordinate sent by the terminal to the core network device, wherein the first identifier and the second identifier are configured for the core network device to pair the measurement signal and the positioning coordinate.

In another implementation, sending the stored measurement signal to the core network device includes: adding a corresponding second identifier to the stored measurement signal, wherein the second identifier and a first identifier corresponding to the positioning coordinate have a mapping relationship, the first identifier is an identifier added by the terminal to the positioning coordinate, the first identifier and the second identifier are configured for the core network device to pair the measurement signal and the positioning coordinate; and sending the stored measurement signal and the second identifier of the stored measurement signal to the core network device.

In a possible implementation, sending the stored measurement signal to the core network device includes: receiving the positioning coordinate sent by the terminal, wherein the positioning coordinate sent by the terminal is a positioning coordinate acquired by the terminal after sending the SRS of a first transmission time; and sending the stored measurement signal corresponding to the SRS of the first transmission time and the positioning coordinate sent by the terminal to the core network device.

In another implementation, sending the stored measurement signal to the core network device includes: sending, in a first order, the measurement signal corresponding to the SRS of each transmission time among the stored measurement signals to the core network device.

In an implementation, sending, in the first order, the measurement signal corresponding to the SRS of each transmission time among the stored measurement signals to the core network device includes: sorting the measurement signal corresponding to the SRS of each transmission time among the stored measurement signals in a chronological order of each transmission time, and sending the sorted measurement signals together to the core network device; or sequentially sending the measurement signal corresponding to the SRS of each transmission time among the stored measurement signals to the core network in the chronological order of each transmission time.

In an optional implementation, the first time unit is a time unit configured by the network device, and the data collection configuration information further includes the first time unit; or the first time unit is a time unit predefined by a protocol.

In a third aspect, an embodiment of the present disclosure provides a method of acquiring positioning data, which is performed by a core network device, including:
receiving a measurement signal and a positioning coordinate sent by a base station; or
receiving the measurement signal sent by the base station and the positioning coordinate sent by a terminal,
wherein the measurement signal is obtained by the base station measuring a sounding reference signal (SRS) sent by the terminal, and the positioning coordinate is acquired by the terminal within a first time unit after sending the SRS.

In an implementation, the first time unit is a time unit configured by a network device, or the first time unit is a time unit predefined by a protocol.

In a fourth aspect, an embodiment of the present disclosure provides a communication device that has a function of realizing some or all of the functions of the terminal in the method according to the first aspect above, for example, the function of the communication device may have a function in some or all embodiments in the present disclosure, or may have a function that implements any one of the embodiments in the present disclosure alone. The function may be implemented by hardware or by hardware executing a corresponding software. The hardware or software includes one or more units or modules corresponding to the above function.

In an implementation, the structure of the communication device may include a transceiver module and a processing module. The processing module is configured to support the communication device in performing the corresponding function in the above method. The transceiver module is configured to support communication between the communication device and other devices. The communication device may further include a storage module, and the storage module is coupled with the transceiver module and the processing module, and has necessary computer programs and data of the communication device.

As an example, the processing module may be a processor, the transceiver module may be a transceiver or a communication interface, and the storage module may be a memory.

In a fifth aspect, an embodiment of the present disclosure provides another communication device that has a function of realizing some or all of the functions of the base station in the method example according to the second aspect above, for example, the function of the communication device may have a function in some or all embodiments in the present disclosure, or may have a function that implements any one of the embodiments in the present disclosure alone. The function may be implemented by hardware or by hardware executing a corresponding software. The hardware or software includes one or more units or modules corresponding to the above function.

In a sixth aspect, an embodiment of the present disclosure provides yet another communication device that has a function of realizing some or all of the functions of the core network in the method example according to the second aspect above, for example, the function of the communication device may have a function in some or all embodiments in the present disclosure, or may have a function that implements any one of the embodiments in the present disclosure alone. The function may be implemented by hardware or by hardware executing a corresponding software. The hardware or software includes one or more units or modules corresponding to the above function.

In a seventh aspect, an embodiment of the present disclosure provides a communication device including a processor that implements the method according to the first aspect above when the processor invokes a computer program in a memory.

In an eighth aspect, an embodiment of the present disclosure provides a communication device including a processor that implements the method according to the second aspect above when the processor invokes a computer program in a memory.

In a ninth aspect, an embodiment of the present disclosure provides a communication device including a processor that implements the method according to the third aspect above when the processor invokes a computer program in a memory.

In a tenth aspect, an embodiment of the present disclosure provides a communication device including a processor and a memory having a computer program stored thereon that, when being executed by the processor, causes the communication device to implement the method according to the first aspect above.

In an eleventh aspect, an embodiment of the present disclosure provides a communication device including a processor and a memory having a computer program stored thereon that, when being executed by the processor, causes the communication device to implement the method according to the second aspect above.

In a twelfth aspect, an embodiment of the present disclosure provides a communication device including a processor and a memory having a computer program stored thereon that, when being executed by the processor, causes the communication device to implement the method according to the third aspect above.

In a thirteenth aspect, an embodiment of the present disclosure provides a communication device including a processor and an interface circuit for receiving code instructions and transmitting the same to the processor, and the processor is configured to execute the code instructions to cause the device to implement the method according to the first aspect.

In a fourteenth aspect, an embodiment of the present disclosure provides a communication device including a processor and an interface circuit for receiving code instructions and transmitting the same to the processor, and the processor is configured to execute the code instructions to cause the device to implement the method according to the second aspect.

In a fifteenth aspect, an embodiment of the present disclosure provides a communication device including a processor and an interface circuit for receiving code instructions and transmitting the same to the processor, and the processor is configured to execute the code instructions to cause the device to implement the method according to the third aspect.

In a sixteenth aspect, an embodiment of the present disclosure provides a system of acquiring positioning data including the communication device according to the fourth aspect, the communication device according to the fifth aspect, and the communication device according to the sixth aspect, or including the communication device according to the seventh aspect, the communication device according to the eighth aspect, and the communication device according to the ninth aspect, or including the communication device according to the tenth aspect, the communication device according to the eleventh aspect, and the communication device according to the twelfth aspect, or including the communication device according to the thirteenth aspect, the communication device according to the fourteenth aspect, and the communication device according to the fifteenth aspect.

In a seventeenth aspect, an embodiment of the present disclosure provides a computer-readable storage medium having instructions for use by the above terminal stored thereon that, when being executed, cause the terminal to implement the method according to the first aspect above.

In an eighteenth aspect, an embodiment of the present disclosure provides a computer-readable storage medium having instructions for use by the above base station stored thereon that, when being executed, cause the base station to implement the method according to the second aspect above.

In a nineteenth aspect, an embodiment of the present disclosure provides a computer-readable storage medium having instructions for use by the above core network device stored thereon that, when being executed, cause the core network device to implement the method according to the third aspect above.

In a twentieth aspect, the present disclosure further provides a computer program product including a computer program that, when running on a computer, causes the computer to perform the method according to the first aspect above.

In a twenty-first aspect, the present disclosure further provides a computer program product including a computer program that, when running on a computer, causes the computer to perform the method according to the second aspect above.

In a twenty-second aspect, the present disclosure further provides a computer program product including a computer program that, when running on a computer, causes the computer to perform the method according to the third aspect above.

In a twenty-third aspect, the present disclosure provides a computer program that, when running on a computer, causes the computer to implement the method according to the first aspect above.

In a twenty-fourth aspect, the present disclosure provides a computer program that, when running on a computer, causes the computer to implement the method according to the second aspect above.

In a twenty-fifth aspect, the present disclosure provides a computer program that, when running on a computer, causes the computer to implement the method according to the third aspect above.

### BRIEF DESCRIPTION OF THE DRAWINGS

In order to more clearly illustrate the technical solution in the embodiment of the present disclosure or the background section, the accompanying drawings to be used in the embodiment of the present disclosure or the background section will be described below.
FIG. 1 is a schematic diagram of an architecture of a communication system provided by an embodiment of the present disclosure;
FIG. 2 is a flowchart of a method of acquiring positioning data provided by an embodiment of the present disclosure;
FIG. 3 is a flowchart of another method of acquiring positioning data provided by an embodiment of the present disclosure;
FIG. 4 is a flowchart of another method of acquiring positioning data provided by an embodiment of the present disclosure;
FIG. 5 is a flowchart of another method of acquiring positioning data provided by an embodiment of the present disclosure;
FIG. 6 is a flowchart of yet another method of acquiring positioning data provided by the present disclosure;
FIG. 7 is a schematic diagram of a structure of a communication device provided by an embodiment of the present disclosure; and
FIG. 8 is a schematic diagram of a structure of another communication device provided by an embodiment of the present disclosure.

### DETAILED DESCRIPTION

Embodiments of the present disclosure are described in detail below, and examples of the embodiments are illustrated in the accompanying drawings, throughout which the same or similar reference numerals indicate the same or similar elements or elements having the same or similar functions. The embodiments described below by reference to the accompanying drawings are exemplary and are intended to explain the present disclosure and are not to be construed as limitations of the present disclosure. In the description of the present disclosure, unless otherwise indicated, "/" denotes a meaning of "or", for example, A/B may denote A or B; "and/or" herein is merely a description of a relationship between associated objects, denoting that there may be three types of relationships, for example, A and/or B may mean: A alone, both A and B, and B alone.

The term used in the embodiments of the present disclosure is used solely for describing a particular embodiment and is not intended to limit the embodiment of the present disclosure. The singular forms "a", "an" and "the" used in the embodiment of the present disclosure and in the appended claims are also intended to include the plural form, unless the context clearly indicates otherwise.

It is to be understood that although the terms first, second, third, etc. may be used in the embodiment of the present disclosure to describe various types of information, such information should not be limited to these terms. These terms are only used to distinguish the same type of information from one another. For example, without departing from the scope of the embodiment of the present disclosure, first information may also be referred to as second information, and similarly, second information may be referred to as first information. Depending on the context, the word "if", as used herein, may be interpreted as "when ...... " or "at the time of ......" or "in response to determining ......".

Embodiments of the present disclosure are described in detail below, and examples of the embodiments are illustrated in the accompanying drawings, throughout which the same or similar reference numerals indicate the same or similar elements. The embodiments described below by reference to the accompanying drawings are exemplary and are intended to explain the present disclosure and are not to be construed as limitations of the present disclosure.

Currently, the consumer market such as shopping mall guide, reverse car locating in car parks, family member anti-lost and self-help guide in exhibition halls, and the vertical industry such as human flow monitoring and analysis, intelligent warehousing and logistics, intelligent manufacturing, emergency rescue, personnel asset management and service robots require a positioning service with higher accuracy.

Supporting various positioning techniques to provide an accurate and reliable user equipment (UE) location is one of the key areas of 3GPP (3rd Generation Partnership Project) standards. The 3GPP has completed a first standard release for positioning a UE based on a New Radio (NR) signal in Rel-16, which mainly meets the positioning needs of 80% of users indoors with a horizontal positioning accuracy of less than 3 meters and 80% of users outdoors with a horizontal positioning accuracy of less than 10 meters. Actually, the 5^{th} generation mobile communication technology (5G) service has a higher positioning requirement.

In some scenarios (e.g., an industrial scenario), there is a high requirement for positioning accuracy, but in such scenarios, the positioning accuracy is often affected by a high number of non-line-of-sights. Therefore, an artificial intelligence (AI)-based positioning enhancement is proposed in Rel-18 of the 3GPP, in which a measurement signal of an acquired sounding reference signal (SRS) is used as a model input, and an acquired positioning coordinate is used as a label to train an AI-based positioning model, which is used to achieve positioning. In some scenarios, the acquisition of the measurement signal of the SRS and the acquisition of the positioning coordinate are not at a same node. However, when the acquisition of the model input and the acquisition of the label are at different nodes during the acquisition of data, this usually results in the measurement signal of the acquired SRS and the positioning coordinate being out of sync in time, thereby affecting the training effect of the AI-based positioning model and the positioning accuracy of the model.

Therefore, the present disclosure provides a method of acquiring positioning data and a device thereof, which can ensure that a measurement signal of SRS and a positioning coordinate acquired by a network device are time-synchronized. Therefore, the time-synchronized measurement signal of SRS and positioning coordinate may be used as training data for training an artificial intelligence (AI)-based positioning model, which may ensure the reliability of the training data, and thus enhance the training effect of the model and improve the positioning accuracy of the model.

In order to better understand a method of acquiring positioning data disclosed by embodiments of the present disclosure, a communication system to which the embodiments of the present disclosure are applied is first described below.

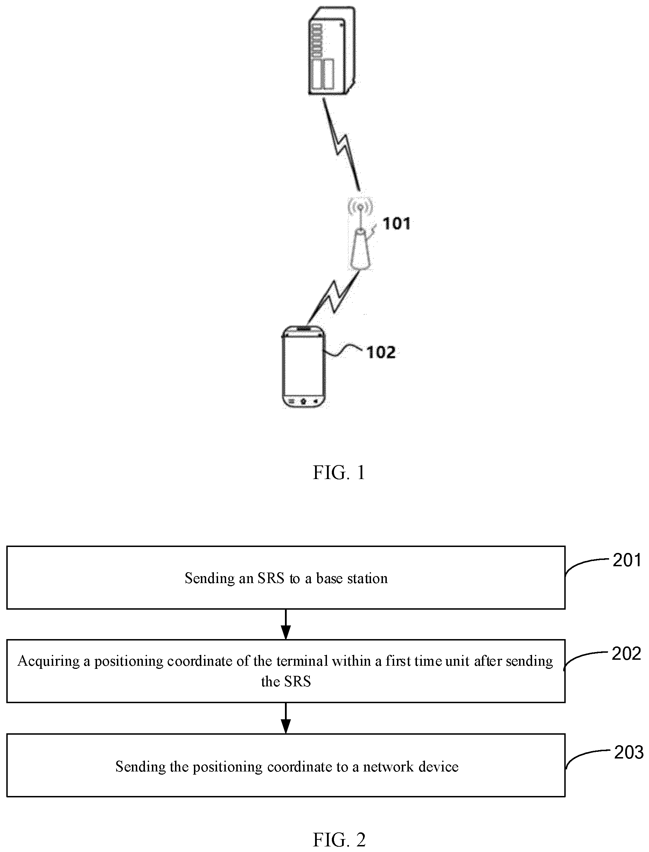

Referring to FIG. 1, FIG. 1 is a schematic diagram of an architecture of a communication system provided by an embodiment of the present disclosure. The communication system may include, but is not limited to, one network device and one terminal. The number and form of the devices shown in FIG. 1 are illustrative only and do not constitute a limitation of the embodiments of the present disclosure, and two or more network devices and two or more terminals may be included in practical applications. The communication system shown in FIG. 1 is illustrated as an example of a communication system including one network device 101 and one terminal 102.

It is to be noted that the technical solution of the embodiments of the present disclosure may be applied to various communication systems, for example, a long-term evolution (LTE) system, a 5^{th} generation (5G) mobile communication system, a 5G new radio (NR) system, or other new future mobile communication systems.

The network device 101 in the embodiment of the present disclosure is an entity on the network side for sending or receiving signals. For example, the network device 101 may be an evolved NodeB (eNB), a transmission reception point (TRP), a next generation NodeB (gNB) in an NR system, a base station in other future mobile communication systems, an access point in a wireless fidelity (WiFi) system or the like. The embodiment of the present disclosure does not limit the specific technologies and specific device forms of the network device. The network device provided in the embodiment of the present disclosure may be consisted of a central unit (CU) and a distributed unit (DU), the CU may also be called a control unit. The structure of the CU-DU may split the protocol layer of the network device such as a base station, a part of the function of the protocol layer is placed in the CU for centralized control, and the remaining part or all of the function of the protocol layer is distributed in the DU, and the DU is centrally controlled by the CU.

The terminal 102 in the embodiment of the present disclosure is an entity the user side for receiving or sending signals, for example, a mobile phone. The terminal may also be referred to as a terminal, user equipment (UE), mobile station (MS), mobile terminal (MT), or the like. The terminal may be a car with a communication function, intelligent car, mobile phone, wearable device, Pad, computer with wireless transceiver function, virtual reality (VR) terminal, augmented reality (AR) terminal, wireless terminal in industrial control, wireless terminal in self-driving, wireless terminal in remote medical surgery, wireless terminal in smart grid, wireless terminal in transportation safety, wireless terminal in smart city, wireless terminal in smart home, or the like. The embodiment of the present disclosure does not limit the specific technologies and specific device form of the terminal.

It is to be understood that the communication system described in the embodiment of the present disclosure is intended to more clearly illustrate the technical solution of the embodiment of the present disclosure and does not constitute a limitation of the technical solution provided by the embodiment of the present disclosure, and a person skilled in the art may know that, with the evolution of the system architecture and the emergence of new service scenarios, the technical solution provided by the embodiment of the present disclosure is equally applicable to a similar technical problem.

The method of acquiring positioning data and the device thereof provided in the present disclosure are described in detail below in conjunction with the accompanying drawings.

Referring to FIG. 2, FIG. 2 is a flowchart of a method of acquiring positioning data provided by an embodiment of the present disclosure. It is to be noted that the method may be performed by a terminal. As shown in FIG. 2, the method may include, but is not limited to, the following steps.

In step 201, a sounding reference signal (SRS) is sent to a base station.

In an embodiment, the SRS may be configured for the base station to acquire a measurement signal of the SRS.

It is to be noted that the NR system supports a plurality of positioning methods, such as NR enhanced cell ID positioning method (E-CID), NR downlink time difference of arrival positioning method (DL-TDOA), NR uplink time difference of arrival positioning method (UL-TDOA), NR multi-cell round-trip time positioning method (Multi-RTT), NR downlink angle-of-departure positioning method, NR downlink angle-of-arrival positioning method or the like. These positioning methods rely on the measurement of positioning reference signal (PRS) by the terminal, such as the measurement of arrival time difference and the measurement of signal strength (Reference Signal Receiving Power (RSRP)), or rely on the sending of corresponding reference symbols by the terminal, so that the base station side measures the angle of arrival or the signal strength.

In an implementation, a network device may configure the terminal to send the SRS. The terminal may send the SRS to the base station, and the base station may measure the SRS and obtain the measurement signal of the SRS. In an implementation, the measurement signal may include, but is not limited to, at least one of channel impulse response, reference signal receiving power (RSRP), or the like.

In step 202, a positioning coordinate of the terminal is acquired within a first time unit after the SRS is sent.

Optionally, the terminal acquires the positioning coordinate of the terminal within the first time unit after sending the SRS. In the case where the terminal is a positioning reference unit (PRU) having the ability of obtaining the coordinate, the positioning coordinate may be provided by the PRU, for example, it may be obtained by a ray tracing method. In the case where the terminal is an ordinary terminal (e.g., a mobile phone), the positioning coordinate may be obtained by other means, such as by satellite positioning, or by wireless fidelity (WiFi) positioning, or by Bluetooth positioning, etc..

In a possible implementation, the first time unit may refer to a length of time, such as 100 milliseconds or the like. In some embodiments of the present disclosure, the first time unit may be a time window configured in advance or specified by protocol. For example, in an implementation, the first time unit may be a time unit configured by the network device, or may be a time unit predefined by protocol.

In an embodiment of the present disclosure, the terminal acquires the positioning coordinate of the terminal within the first time unit after sending the SRS, which may ensure that the time of sending the SRS is substantially inconsistent with the actual time of obtaining the positioning coordinate, and thus can ensure that the acquired measurement signal of SRS and positioning coordinate are time-synchronized.

In step 203, the positioning coordinate is sent to the network device.

Optionally, the terminal may send the acquired positioning coordinate to the network device. In an implementation, the terminal may send the acquired positioning coordinate to the base station. The base station integrates the acquired measurement signal and the positioning coordinate sent by the terminal and then sends the same to a core network device. Alternatively, in another implementation, the terminal sends the acquired positioning coordinate directly to the core network device, and the core network device may also receive the measurement signal sent by the base station. The core network device may use the measurement signal acquired by the base station and the positioning coordinate acquired by the terminal to subsequentially train an AI-based positioning model using the training data.

By implementing the embodiment of the present disclosure, the positioning coordinate of the terminal is acquired by the terminal within the first time unit after the terminal sends the sounding reference signal (SRS) to the base station, so that the time when the terminal sends the SRS is consistent with the time when the terminal acquires the positioning coordinate, thereby ensuring that the measurement signal of the SRS and the positioning coordinate acquired by the network device are time-synchronized. Therefore, the time-synchronized measurement signal of SRS and positioning coordinate may be used as the training data for training an artificial intelligence (AI)-based positioning model, which may ensure the reliability of the training data, and thus enhance the training effect of the model and improve the positioning accuracy of the model.

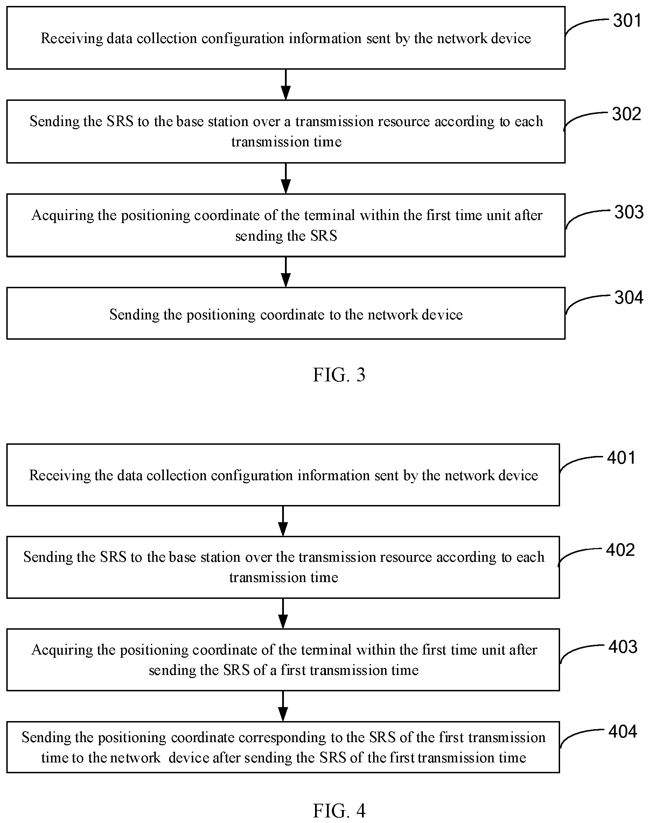

It is to be noted that the present disclosure may configure the terminal to send the SRS via the network device, and the network device may also configure the base station to measure the SRS and store the measurement signal. Optionally, referring to FIG. 3, FIG. 3 is a flowchart of another method of acquiring positioning data provided by an embodiment of the present disclosure. It is to be noted that the method may be performed by the terminal. As shown in FIG. 3, the method may include, but is not limited to, the following steps.

In step 301, data collection configuration information sent by the network device is received.

In an implementation, during the acquisition of the positioning data (e.g., including the measurement signal of SRS and the positioning coordinate of the terminal), the network device may configure the acquisition of the positioning data, and send the data collection configuration information to the terminal. In an embodiment of the present disclosure, the data collection configuration information may include, but is not limited to, a relevant parameter for determining a transmission resource and a transmission time for the SRS, or the like.

In step 302, the SRS is sent to the base station over the transmission resource according to each transmission time.

Optionally, the terminal may send the SRS to the base station over the transmission resource of the SRS according to each transmission time. For example, a plurality of samples may be acquired, i.e., a plurality of sets of positioning data may be acquired, each set of positioning data includes the measurement signal acquired by the base station and the positioning coordinate acquired by the terminal. The network device may configure the data collection configuration information for the terminal. The data collection configuration information includes the relevant parameter for determining the transmission resource and the transmission time for the SRS. In this way, the terminal may send the SRS to the base station over the transmission resource of the SRS according to each transmission time. The base station measures the received SRS to obtain the measurement signal of SRS, thereby enabling the base station to acquire the measurement signal of the SRS sent by the terminal at each transmission time.

In step 303, the positioning coordinate of the terminal is acquired within the first time unit after the SRS is sent.

Optionally, the terminal acquires the positioning coordinate of the terminal within the first time unit after sending the SRS at each transmission time.

In a possible implementation, the first time unit may refer to a length of time, such as 100 milliseconds or the like. In some embodiments of the present disclosure, the first time unit may be a time window configured in advance or specified by protocol. For example, in an implementation, the first time unit may be a time unit configured by the network device, and the data collection configuration information may include the first time unit. That is, the network device may configure the transmission resource and the transmission time of the SRS for the terminal, and may also configure the first time unit for the terminal. Alternatively, in another implementation, the first time unit may also be a time unit predefined by protocol.

In step 304, the positioning coordinate is sent to the network device.

Optionally, the terminal may send the acquired positioning coordinate to the network device.

In a possible implementation, the terminal may add a corresponding first identifier to the positioning coordinate, the first identifier has a mapping relationship with a second identifier corresponding to the measurement signal, and the second identifier is an identifier added by the base station to the measurement signal. The first identifier and the second identifier are configured for the network device to pair the measurement signal and the positioning coordinate. The terminal sends the positioning coordinate and the first identifier corresponding to the positioning coordinate to the network device.

As an example, the base station may add a corresponding second identifier to the acquired measurement signal of the SRS. The terminal may add a corresponding first identifier to the acquired positioning coordinate. The first identifier and the second identifier have a mapping relationship, so that the network device may pair the measurement signal acquired by the base station and the positioning coordinate acquired by the terminal according to the corresponding identifier. For example, the first identifier and the second identifier may be the same identifier, for example, the identifier may be a serial number or the like.

By way of example, two positioning data acquisitions have been carried out, i.e., 2 samples have been acquired, and the terminal sends the SRS to the base station at a first transmission time. The base station measures the SRS and obtains a measurement signal a1 of the SRS sent at the first transmission time, and the terminal acquires the positioning coordinate b1 of the terminal within the first time unit after the SRS is sent at the first time. The terminal sends the SRS to the base station at the second transmission time. The base station measures the SRS and obtains a measurement signal a2 of the SRS sent at the second transmission time, and the terminal acquires the positioning coordinate b2 of the terminal within the first time unit after the SRS is sent at the second time. The base station may add a corresponding second identifier '1' to the measurement signal a1, and add a corresponding second identifier '2' to the measurement signal a2. The terminal may add a corresponding first identifier '1' to the positioning coordinate b1 and a corresponding second identifier '2' to the positioning coordinate b2.

The network device may pair the measurement signal acquired by the base station with the positioning coordinate acquired by the terminal through the corresponding identifiers. For example, the terminal sends the positioning coordinate and the first identifier thereof to the base station. The base station may pair the measurement signal acquired by the base station and the positioning coordinate acquired by the terminal through the corresponding identifiers, and send the paired measurement signal and positioning coordinate to the core network device. Alternatively, the terminal may send the positioning coordinate and the first identifier thereof to the core network device, and the base station sends the acquired measurement signal and the second identifier thereof to the core network device. The core network device pairs the received measurement signal and positioning coordinate through the corresponding identifiers to achieve the acquisition of the positioning data.

By implementing the embodiment of the present disclosure, the positioning coordinate of the terminal is acquired by the terminal within the first time unit after the terminal sends the sounding reference signal (SRS) to the base station, so that the time when the terminal sends the SRS is consistent with the time when the terminal acquires the positioning coordinate, thereby ensuring that the measurement signal of the SRS and the positioning coordinate acquired by the network device are time-synchronized. By adding corresponding identifiers to the measurement signal and the positioning coordinate, and pairing the measurement signal and the coordinate acquired by the terminal through the corresponding identifiers, a mapping relationship between a channel characteristic experienced by the SRS at a time point and the coordinate of the terminal at that time may be obtained, therefore the measurement signal and the positioning coordinate in the positioning data acquired by the network side are synchronized in time and have a mapping relationship, and thus the positioning data is used as the training data for training an artificial intelligence (AI)-based positioning model, which may ensure the reliability of the training data, and thus enhance the training effect of the model and improve the positioning accuracy of the model.

Referring to FIG. 4, FIG. 4 is a flowchart of another method of acquiring positioning data provided by an embodiment of the present disclosure. It is to be noted that the method may be executed by the terminal. As shown in FIG. 4, the method may include, but is not limited to, the following steps.

In step 401, the data collection configuration information sent by the network device is received.

In an embodiment of the present disclosure, the implementation of step 401 may be achieved in any one of the ways of the embodiments of the present disclosure, respectively, which is not limited herein and will not be repeated.

In step 402, the SRS is sent to the base station over the transmission resource according to each transmission time.

In an embodiment of the present disclosure, the implementation of step 402 may be achieved in any one of the ways of the embodiments of the present disclosure, respectively, which is not limited herein and will not be repeated.

In step 403, the positioning coordinate of the terminal is acquired within the first time unit after the SRS of a first transmission time is sent.

In an implementation, the first transmission time may be understood as a current transmission time. For example, the terminal may send the SRS to the base station according to each transmission time, and within the first time unit after the SRS of the current transmission time is sent, the terminal may acquire the positioning coordinate of the terminal.

In step 404, after the SRS of the first transmission time is sent, the positioning coordinate corresponding to the SRS of the first transmission time is sent to the network device.

In a possible implementation, the terminal sends the positioning coordinate corresponding to the SRS of the first transmission time to the base station after the SRS of the first transmission time is sent. The base station sends the measurement signal of the SRS sent at the first transmission time, and the positioning coordinate sent by the terminal to the core network device, and the core network device completes one acquisition after receiving the measurement signal acquired by the base station and the positioning coordinates acquired by the terminal. After the one acquisition is completed, a next sample acquisition is carried out, i.e., the terminal sends the SRS to the base station at a next transmission time, acquires the positioning coordinate of the terminal within the first time unit after sending the SRS of the next transmission time, and sends the corresponding positioning coordinate to the base station after sending the SRS of the next transmission time to realize the acquisition of the next sample. As a result, the measurement signal acquired by the base station and the positioning coordinate acquired by the terminal can be mapped by such a sending method, and thus a mapping relationship between a channel characteristic experienced by the SRS at a time point and the coordinate of the terminal at that time may be obtained, therefore the measurement signal and the positioning coordinate in the positioning data acquired by the network side are synchronized in time and have a mapping relationship, and thus the positioning data is used as the training data for training an artificial intelligence (AI)-based positioning model, which may ensure the reliability of the training data, and thus enhance the training effect of the model and improve the positioning accuracy of the model.

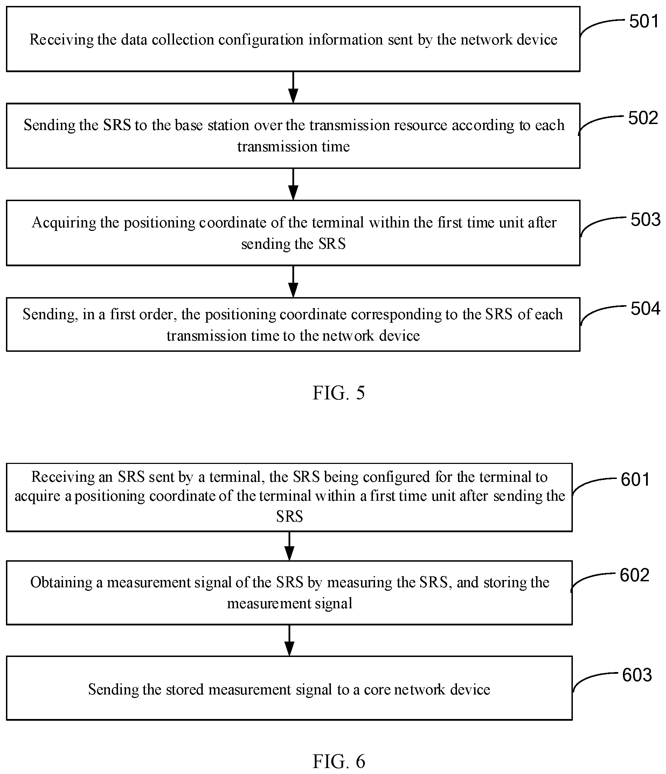

Referring to FIG. 5, FIG. 5 is a flowchart of another method of acquiring positioning data provided by an embodiment of the present disclosure. It is to be noted that the method may be executed by the terminal. As shown in FIG. 5, the method may include, but is not limited to, the following steps.

In step 501, the data collection configuration information sent by the network device is received.

In an embodiment of the present disclosure, the implementation of step 501 may be achieved in any one of the ways of the embodiments of the present disclosure, respectively, which is not limited herein and will not be repeated.

In step 502, the SRS is sent to the base station over the transmission resource according to each transmission time.

In an embodiment of the present disclosure, the implementation of step 502 may be achieved in any one of the ways of the embodiments of the present disclosure, respectively, which is not limited herein and will not be repeated.

In step 503, the positioning coordinate of the terminal is acquired within the first time unit after the SRS is sent.

Optionally, the terminal may acquire the positioning coordinate of the terminal within the first time unit after the SRS of each transmission time is sent.

In step 504, the positioning coordinate corresponding to the SRS of each transmission time is sent to the network device in a first order.

In an embodiment of the present disclosure, the first order may be a pre-configured order or an order specified by protocol.

In a possible implementation, the positioning coordinate corresponding to the SRS of each transmission time may sorted in a chronological order of each transmission time, and the sorted positioning coordinates together are sent to the network device.

For example, the terminal acquires the positioning coordinate within the first time unit after sending the SRS at a transmission time, which is recorded as that the acquisition of one positioning coordinate sample is completed. For example, if the samples of 1000 positioning coordinates are required to be acquired, the terminal may sort the 1000 positioning coordinates according to the time order of each transmission time thereof and send the sorted positioning coordinates together to the base station. The base station may measure the received SRS each time and store the measurement signal. When the stored measurement signal is sent to the core network device, the acquired SRS measurement signals may be sorted in the acquisition order thereof, the sorted measurement signals may be sent into a message sending queue, and the received positioning coordinates from the terminal are sent into the message sending queue. Upon receiving the messages sent in the two message sending queues, the core network device may map the measurement signal and the positioning coordinate based on the positions thereof in the queues. That is, for samples with the same location in the queues, there is a connection relationship therebetween. For example, the 5^{th} measurement signal of SRS is mapped to the 5^{th} positioning coordinate, and they belong to samples that are acquired at the same time.

For another example, if the samples of 1000 positioning coordinates are required to be acquired, the terminal may sort the 1000 positioning coordinates according to the time order of each transmission time thereof and send the sorted positioning coordinates together to the core network device. The base station may measure the received SRS each time and store the measurement signal. When the stored measurement signal is sent to the core network device, the acquired SRS measurement signals may be sorted in the acquisition order thereof, the sorted measurement signals may be sent to the core network device together. Therefore, the core network device receives a message queue sent by the terminal and a message queue sent by the base station, and may map the measurement signal and the positioning coordinate based on the positions thereof in the queues. That is, for samples with the same location in the queues, there is a connection relationship therebetween. For example, the 5^{th} measurement signal of SRS is mapped to the 5^{th} positioning coordinate, and they belong to the samples that are acquired at the same time.

In another possible implementation, the positioning coordinate corresponding to the SRS of each transmission time is sequentially sent to the network device in the chronological order of each transmission time.

For example, the terminal acquires the positioning coordinate within the first time unit after sending the SRS at a transmission time, which is recorded as that the acquisition of one positioning coordinate sample is completed. For example, if the samples of 1000 positioning coordinates are required to be acquired, the terminal may sort the 1000 positioning coordinates according to the time order of each transmission time thereof and sequentially send the sorted positioning coordinates to the core network device. The base station may measure the received SRS each time and store the measurement signal. When the stored measurement signal is sent to the core network device, the acquired SRS measurement signals may be sorted in the acquisition order thereof, and the sorted measurement signals may be sequentially sent to the core network device. Therefore, the core network device may map the measurement signal and the positioning coordinate based on the positions thereof in the queues. That is, for samples with the same location in the queues, there is a connection relationship therebetween. For example, the 5^{th} measurement signal of SRS is mapped to the 5^{th} positioning coordinate, and they belong to samples that are acquired at the same time.

By implementing the embodiment of the present disclosure, the measurement signal of SRS and the positioning coordinate acquired by the terminal are sent in the first order, and thus the measurement signal and the positioning coordinate of the terminal are mapped, a mapping relationship between a channel characteristic experienced by the SRS at a time point and the coordinate of the terminal at that time may be obtained, therefore the measurement signal and the positioning coordinate in the positioning data acquired by the network side are synchronized in time and have a mapping relationship, and thus the positioning data is used as the training data for training an artificial intelligence (AI)-based positioning model, which may ensure the reliability of the training data, and thus enhance the training effect of the model and improve the positioning accuracy of the model.

It is to be understood that the above embodiments describe the implementation of the method of acquiring positioning data according to the embodiments of the present disclosure from the terminal side. An embodiment of the present disclosure also provides a method of acquiring positioning data, and the implementation of which is described below from the base station side. Referring to FIG. 6, FIG. 6 is a flowchart of yet another method of acquiring positioning data provided by the present disclosure. It is to be noted that the method may be performed by a base station. As shown in FIG. 6, the method may include, but is not limited to, the following steps.

In step 601, an SRS sent by a terminal is received, the SRS being configured for the terminal to acquire a positioning coordinate of the terminal within a first time unit after sending the SRS.

In an implementation, the terminal may send the SRS to the base station. The SRS may be configured for the terminal to acquire the positioning coordinate of the terminal within the first time unit after the SRS is sent. That is, the terminal acquires the positioning coordinate of the terminal within the first time unit after sending the SRS. The terminal may also send the acquired positioning coordinate to the base station or a core network device. In an embodiment of the present disclosure, the first time unit may be a time unit configured by the network device or predefined by protocol.

In some embodiments of the present disclosure, the base station may send acquisition configuration information to the terminal. The data collection configuration information includes a relevant parameter for determining a transmission resource and a transmission time for the SRS, and the transmission resource and the transmission time are configured to instruct the terminal to send the SRS over the transmission resource according to each transmission time. As an example, when the first time unit may be a time unit configured by the network device, the data collection configuration information may also include the first time unit.

In step 602, a measurement signal of the SRS is obtained by measuring the SRS, and the measurement signal is stored.

In a possible implementation, configuration information configured for the base station may be determined, and the configuration information is configured to instruct the base station to measure the SRS and to store the measurement signal of the SRS. Based on the configuration information, the base station may obtain the measurement signal of the SRS by measuring the SRS and store the measurement signal.

That is, the network device may configure the base station to measure the SRS and to store the measurement signal. In this way, the base station may measure the SRS and store the obtained measurement signal.

In step 603, the stored measurement signal is sent to a core network device.

In an embodiment of the present disclosure, the measurement signal is configured for the core network device to acquire positioning data, which includes the measurement signal acquired by the base station and the positioning coordinate acquired by the terminal.

It is to be noted that the terminal may send the acquired positioning coordinate to the base station, and the base station integrates the acquired measurement signal and the positioning coordinate of the terminal and then sends the same to the core network device. Optionally, in an implementation, the base station may add a corresponding second identifier to the stored measurement signal. The base station receives the positioning coordinate and a first identifier corresponding to the positioning coordinate sent by the terminal, the first identifier and the second identifier have a mapping relationship, and the first identifier is an identifier added by the terminal to the positioning coordinate. The base station pairs the measurement signal and the positioning coordinate corresponding to each other according to the first identifier and the second identifier. The base station sends the measurement signal and the positioning coordinate paired with each other to the core network device.

It is to be noted that the terminal may send the acquired positioning coordinate to the base station, and the base station sends the acquired measurement signal and the positioning coordinate of the terminal to the core network device. The core network device integrates the measurement signal and the positioning coordinate. Optionally, in an implementation, the base station adds a corresponding second identifier to the stored measurement signal. The base station receives the positioning coordinate and a first identifier corresponding to the positioning coordinate sent by the terminal. The base station sends the stored measurement signal, the second identifier of the stored measurement signal, and the positioning coordinate and the first identifier of the positioning coordinate sent by the terminal to the core network device. The first identifier and the second identifier are configured for the core network device to pair the measurement signal and the positioning coordinate. That is, the core network device pairs the measurement signal and the positioning coordinate according to the first identifier and the second identifier. By such sending manner, the measurement signal acquired by the base station and the positioning coordinate acquired by the terminal may be mapped, and a mapping relationship between a channel characteristic experienced by the SRS at a time point and the coordinate of the terminal at that time may be obtained, therefore the measurement signal and the positioning coordinate in the positioning data acquired by the network side are synchronized in time and have a mapping relationship, and thus the positioning data is used as the training data for training an artificial intelligence (AI)-based positioning model, which may ensure the reliability of the training data, and thus enhance the training effect of the model and improve the positioning accuracy of the model.

It is to be noted that the terminal may send the acquired positioning coordinates to the core network device, and the base station sends the acquired measurement signal to the core network device. The core network device integrates the measurement signal and the positioning coordinate. Optionally, in an implementation, the base station adds a corresponding second identifier to the stored measurement signal, the second identifier and a first identifier corresponding to the positioning coordinate have a mapping relationship, the first identifier is an identifier added by the terminal to the positioning coordinate, and the first identifier and the second identifier are configured for the core network device to pair the measurement signal and the positioning coordinate. The base station sends the stored measurement signal and the second identifier of the stored measurement signal to the core network device. Therefore, corresponding identifiers are added to the measurement signal and the positioning coordinate, and the measurement signal and the coordinate acquired by the terminal are paired through the corresponding identifiers, so that a mapping relationship between a channel characteristic experienced by the SRS at a time point and the coordinate of the terminal at that time may be obtained, therefore the measurement signal and the positioning coordinate in the positioning data acquired by the network side are synchronized in time and have a mapping relationship, and thus the positioning data is used as the training data for training an artificial intelligence (AI)-based positioning model, which may ensure the reliability of the training data, and thus enhance the training effect of the model and improve the positioning accuracy of the model.

In some embodiments of the present disclosure, the implementation of the base station sending the stored measurement signal to the core network device may include: receiving the positioning coordinate sent by the terminal, wherein the positioning coordinate sent by the terminal is a positioning coordinate acquired by the terminal after sending the SRS of a first transmission time; and sending the stored measurement signal corresponding to the SRS of the first transmission time and the positioning coordinate sent by the terminal to the core network device.

By way of example, the terminal sends the positioning coordinate corresponding to the SRS of the first transmission time to the base station after sending the SRS of the first transmission time. The base station sends the measurement signal of the SRS sent at the first transmission time and the positioning coordinate sent by the terminal to the core network device, and the core network device completes one acquisition after receiving the measurement signal acquired by the base station and the positioning coordinate acquired by the terminal. After the one acquisition is completed, a next sample acquisition is carried out, i.e., the terminal sends the SRS to the base station at a next transmission time, acquires the positioning coordinate of the terminal within the first time unit after sending the SRS of the next transmission time, and sends the corresponding positioning coordinate to the base station after sending the SRS of the next transmission time to realize the acquisition of the next sample. As a result, the measurement signal acquired by the base station and the positioning coordinate acquired by the terminal can be mapped by such a sending method, and thus a mapping relationship between a channel characteristic experienced by the SRS at a time point and the coordinate of the terminal at that time may be obtained, therefore the measurement signal and the positioning coordinate in the positioning data acquired by the network side are synchronized in time and have a mapping relationship, and thus the positioning data is used as the training data for training an artificial intelligence (AI)-based positioning model, which may ensure the reliability of the training data, and thus enhance the training effect of the model and improve the positioning accuracy of the model.

In some embodiments of the present disclosure, the implementation of the base station sending the stored measurement signal to the core network device may include: sending, in a first order, the measurement signal corresponding to the SRS of each transmission time among the stored measurement signals to the core network device.

In an implementation, the base station may sort the measurement signal corresponding to the SRS of each transmission time among the stored measurement signals in a chronological order of each transmission time, and send the sorted measurement signals together to the core network device.

For example, the terminal acquires the positioning coordinate within the first time unit after sending the SRS at a transmission time, which is recorded as that the acquisition of one positioning coordinate sample is completed. For example, if the samples of 1000 positioning coordinates are required to be acquired, the terminal may sort the 1000 positioning coordinates according to the time order of each transmission time thereof and send the sorted positioning coordinates together to the core network device. The base station may measure the received SRS each time and store the measurement signal. When the stored measurement signal is sent to the core network device, the acquired SRS measurement signals may be sorted in the acquisition order thereof, the sorted measurement signals may be sent to the core network device together. Therefore, the core network device receives a message queue sent by the terminal and a message queue sent by the base station, and may map the measurement signal and the positioning coordinate based on the positions thereof in the queues. That is, for samples with the same location in the queues, there is a connection relationship therebetween. For example, the 5^{th} measurement signal of SRS is mapped to the 5^{th} positioning coordinate, and they belong to the samples that are acquired at the same time.

In another implementation, the base station may sequentially send the measurement signal corresponding to the SRS of each transmission time among the stored measurement signals to the core network in the chronological order of each transmission time.

For example, the terminal acquires the positioning coordinate within the first time unit after sending the SRS at a transmission time, which is recorded as that the acquisition of one positioning coordinate sample is completed. For example, if the samples of 1000 positioning coordinates are required to be acquired, the terminal may sort the 1000 positioning coordinates according to the time order of each transmission time thereof and sequentially send the sorted positioning coordinates to the core network device. The base station may measure the received SRS each time and store the measurement signal. When the stored measurement signal is sent to the core network device, the acquired SRS measurement signals may be sorted in the acquisition order thereof, and the sorted measurement signals may be sequentially sent to the core network device. Therefore, the core network device may map the measurement signal and the positioning coordinate based on the positions thereof in the queues. That is, for samples with the same location in the queues, there is a connection relationship therebetween. For example, the 5^{th} measurement signal of SRS is mapped to the 5^{th} positioning coordinate, and they belong to samples that are acquired at the same time.

It is to be understood that the above embodiments describe the implementations of the method of acquiring positioning data according to the embodiments of the present disclosure from the terminal side and the base station side respectively. An embodiment of the present disclosure also provides a method of acquiring positioning data, and the implementation of which is described below from the core network device side. The method may include, but is not limited to: receiving, by a core network device, a measurement signal and a positioning coordinate sent by a base station; or receiving, by the core network device, the measurement signal sent by the base station and the positioning coordinate sent by a terminal. The measurement signal is obtained by the base station measuring an SRS sent by the terminal, and the positioning coordinate is acquired by the terminal within a first time unit after sending the SRS. As an example, the first time unit may be a time unit configured by a network device or predefined by protocol.

In an embodiment of the present disclosure, the implementation of the terminal acquiring and sending the positioning coordinate may be realized in any way of the embodiments of the present disclosure, respectively, which is not limited and repeated herein. The implementation of the base station acquiring and sending the measurement signal may be realized in any way of the embodiments of the present disclosure, respectively, which is not limited and repeated herein.

In the above-described embodiments provided by the present disclosure, the method provided in the embodiments of the present disclosure is described from the perspectives of the terminal, base station, and core network device, respectively. In order to implement each of the functions in the method provided by the above embodiment of the present disclosure, the terminal, the base station, and the core network device may include a hardware structure and a software module, and implement each of the above functions in the form of the hardware structure, the software module, or the hardware structure plus the software module. A function in the above-described functions may be performed in the form of the hardware structure, the software module, or the hardware structure plus the software module.

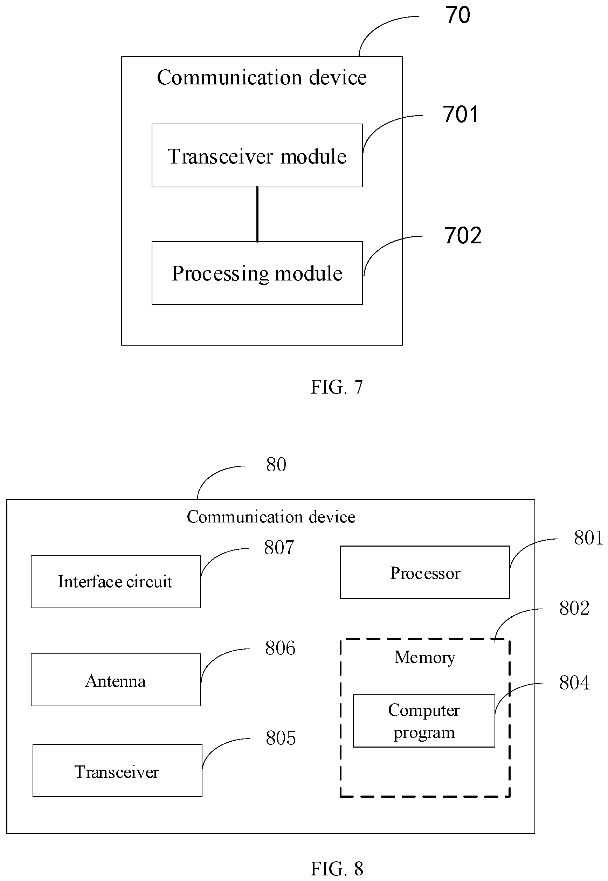

Referring to FIG. 7, FIG. 7 is a schematic diagram of a structure of a communication device 70 provided by an embodiment of the present disclosure. The communication device 70 shown in FIG. 7 may include a transceiver module 701 and a processing module 702. The transceiver module 701 may include a sending module and/or a receiving module, the sending module is configured to implement a sending function, the receiving module is configured to implement a receiving function, and the transceiver module 701 may implement the sending function and/or the receiving function.

The communication device 70 may be a terminal, a device in a terminal, or a device capable of being matched for use with a terminal. Alternatively, the communication device 70 may be a base station, or a device in a base station, or a device capable of being matched for use with a base station. Alternatively, the communication device 70 may be a core network device, or a device in a core network device, or a device capable of being matched for use with a core network device.

The communication device 70 is a terminal. The transceiver module 701 is configured to send a sounding reference signal (SRS) to a base station, the SRS being configured for the base station to acquire a measurement signal of the SRS. The processing module 702 is configured to acquire a positioning coordinate of the terminal within a first time unit after sending the SRS. The transceiver module 701 is further configured to send the positioning coordinate to a network device.

In an implementation, the transceiver module 701 is specifically configured to: receive data collection configuration information sent by the network device, the data collection configuration information including a relevant parameter for determining a transmission resource and a transmission time for the SRS; and send the SRS to the base station over the transmission resource according to each transmission time.

In a possible implementation, the processing module 702 is further configured to: add a corresponding first identifier to the positioning coordinate, the first identifier having a mapping relationship with a second identifier corresponding to the measurement signal, the second identifier being an identifier added by the base station to the measurement signal, and the first identifier and the second identifier being configured for the network device to pair the measurement signal and the positioning coordinate. the transceiver module 701 is specifically configured to send the positioning coordinate and the first identifier to the network device.

In a possible implementation, the processing module 702 is specifically configured to: acquire the positioning coordinate of the terminal within the first time unit after sending the SRS of a first transmission time, and the transceiver module 701 is specifically configured to send the positioning coordinate corresponding to the SRS of the first transmission time to the network device after sending the SRS of the first transmission time.

In a possible implementation, the transceiver module 701 is specifically configured to send, in a first order, the positioning coordinate corresponding to the SRS of each transmission time to the network device.

In a possible implementation, the transceiver module 701 is specifically configured to: sort the positioning coordinate corresponding to the SRS of each transmission time in a chronological order of each transmission time, and send the sorted positioning coordinates together to the network device; or sequentially send the positioning coordinate corresponding to the SRS of each transmission time to the network device in the chronological order of each transmission time.

In a possible implementation, the first time unit is a time unit configured by the network device, and the data collection configuration information further includes the first time unit; or the first time unit is a time unit predefined by a protocol.

The communication is a base station. The transceiver module 701 is configured to receive a sounding reference signal (SRS) sent by a terminal, the SRS being configured for the terminal to acquire a positioning coordinate of the terminal within a first time unit after sending the SRS. The processing module 702 is configured to obtain a measurement signal of the SRS by measuring the SRS, and store the measurement signal. The transceiver module 701 is further configured to send the stored measurement signal to a core network device, the measurement signal is configured for the core network device to acquire the positioning data, and the positioning data includes the measurement signal acquired by the base station and the positioning coordinate acquired by the terminal.

In an implementation, the transceiver module 701 is further configured to send data collection configuration information to the terminal, the data collection configuration information includes a relevant parameter for determining a transmission resource and a transmission time for the SRS, and the transmission resource and the transmission time are configured to instruct the terminal to send the SRS over the transmission resource according to each transmission time.

In an implementation, the processing module 702 is specifically configured to: determining configuration information configured for the base station, the configuration information being configured to instruct the base station to measure the SRS and to store the measurement signal of the SRS; and obtain the measurement signal of the SRS by measuring the SRS and store the measurement signal based on the configuration information.

In a possible implementation, the processing module 702 is further configured to add a corresponding second identifier to the stored measurement signal. The transceiver module 701 is further configured to receive the positioning coordinate and a first identifier corresponding to the positioning coordinate sent by the terminal, the first identifier and the second identifier have a mapping relationship, and the first identifier is an identifier added by the terminal to the positioning coordinate. The processing module 702 is further configured to pair the measurement signal and the positioning coordinate corresponding to each other according to the first identifier and the second identifier. The transceiver module 701 is further configured to send the measurement signal and the positioning coordinate paired with each other to the core network device.

In a possible implementation, the processing module 702 is further configured to add a corresponding second identifier to the stored measurement signal. The transceiver module 701 is further configured to receive the positioning coordinate and a first identifier corresponding to the positioning coordinate sent by the terminal. The transceiver module 701 is further configured to send the stored measurement signal, the second identifier of the stored measurement signal, and the positioning coordinate and the first identifier of the positioning coordinate sent by the terminal to the core network device, and the first identifier and the second identifier are configured for the core network device to pair the measurement signal and the positioning coordinate.

In a possible implementation, the processing module 702 is further configured to add a corresponding second identifier to the stored measurement signal, the second identifier and a first identifier corresponding to the positioning coordinate have a mapping relationship, the first identifier is an identifier added by the terminal to the positioning coordinate, the first identifier and the second identifier are configured for the core network device to pair the measurement signal and the positioning coordinate. The transceiver module 701 is further configured to send the stored measurement signal and the second identifier of the stored measurement signal to the core network device.

In a possible implementation, the transceiver module 701 is specifically configured to: receive the positioning coordinate sent by the terminal, the positioning coordinate sent by the terminal being a positioning coordinate acquired by the terminal after sending the SRS of a first transmission time; and send the stored measurement signal corresponding to the SRS of the first transmission time and the positioning coordinate sent by the terminal to the core network device.

In a possible implementation, the transceiver module 701 is specifically configured to send, in a first order, the measurement signal corresponding to the SRS of each transmission time among the stored measurement signals to the core network device. Optionally, in an implementation, the transceiver module 701 is specifically configured to sort the measurement signal corresponding to the SRS of each transmission time among the stored measurement signals in a chronological order of each transmission time, and send the sorted measurement signals together to the core network device; or sequentially send the measurement signal corresponding to the SRS of each transmission time among the stored measurement signals to the core network in the chronological order of each transmission time.

In an implementation, the first time unit is a time unit configured by the network device, and the data collection configuration information further includes the first time unit; or the first time unit is a time unit predefined by a protocol.

The communication device 70 is a core network device. The transceiver module 701 is configured to receive a measurement signal and a positioning coordinate sent by a base station; or receive the measurement signal sent by the base station and the positioning coordinate sent by a terminal. The measurement signal is obtained by the base station measuring a sounding reference signal (SRS) sent by the terminal, and the positioning coordinate is acquired by the terminal within a first time unit after sending the SRS.

In an implementation, the first time unit is a time unit configured by a network device, or the first time unit is a time unit predefined by a protocol.

With respect to the device in the above embodiments, the specific manner in which each module performs an operation has been described in detail in the embodiments relating to the method, which will not be described in detail herein.

Referring to FIG. 8, FIG. 8 is a schematic diagram of a structure of another communication device 80 provided by an embodiment of the present disclosure. The communication device 80 may be a base station, or a terminal, or a core network device, or may be a chip, chip system or processor that supports the base station to implement the above-described method, or a chip, chip system, or processor that supports the terminal to implement the above-described method, or a chip, chip system, or processor that supports the core network device to implement the above-described method. The device may be used to implement the method described in the above method embodiments, details of which may refer to the descriptions in the above method embodiments.

The communication device 80 may include one or more processors 801. The processor 801 may be a general purpose processor, a specialized processor or the like. For example, the processor 801 may be a baseband processor or a central processor. The baseband processor may be used for processing communication protocol and communication data, and the central processor may be used for controlling a communication device (e.g., a base station, a baseband chip, a terminal, a terminal chip, a DU or CU, etc.) to execute a computer program and process data of the computer program.

Optionally, the communication device 80 may also include one or more memories 802 which may have a computer program 804 stored thereon, and the processor 801 executes the computer program 804 to cause the communication device 80 to perform the method described in the above method embodiments. Optionally, data may also be stored in the memory 802. The communication device 80 and the memory 802 may be provided separately or may be integrated together.

Optionally, the communication device 80 may further include a transceiver 805, an antenna 806. The transceiver 805 may be referred to as a transceiver unit, a transceiver machine, a transceiver circuit, or the like, and is used for implementing a transceiver function. The transceiver 805 may include a receiver and a transmitter, the receiver may be referred to as a receiving machine, a receiving circuit or the like, and is used for implementing a receiving function, and the transmitter may be referred to as a transmitting machine, a transmitting circuit, or the like, and is used for implementing the transmitting function.

Optionally, the communication device 80 may also include one or more interface circuits 807. The interface circuit 807 is used for receiving code instructions and transmitting the same to the processor 801. The processor 801 runs the code instructions to cause the communication device 80 to perform the method described in the above method embodiments.

The communication device 80 is a terminal. The processor 801 is used to perform step 202 in FIG. 2; to perform step 303 in FIG. 3; to perform step 403 in FIG. 4; or to perform step 503 in FIG. 5. The transceiver 805 is used to perform step 201 and step 203 in FIG. 2; step 301, step 302 and step 304 in FIG. 3; step 401, step 402 and step 404; or step 501, step 502 and step 504 in FIG. 5.

The communication device 80 is a base station. The transceiver 805 is used to perform steps 601 and 603 in FIG. 6. The processor 801 is used to perform step 602 in FIG. 6.

The communication device 80 is a core network device. The transceiver 805 is used to perform the steps of receiving the measurement signal and the positioning coordinate sent by the base station; or receiving the measurement signal sent by the base station and receiving the positioning coordinate sent by the terminal.

In an implementation, the process 801 may include a transceiver for implementing the receiving and transmitting functions. The transceiver may for example be a transceiver circuit, or an interface, or an interface circuit. The transceiver circuit, interface, or interface circuit for implementing the receiving and transmitting functions may be separate or may be integrated together. The transceiver circuit, interface, or interface circuit described above may be used for code/data reading and writing, or the transceiver circuit, interface, or interface circuit described above may be used for signal transmission or delivery.

In an implementation, the processor 801 may have a computer program stored thereon that, when running on the processor 801, may cause the communication device 80 to perform the method described in the above method embodiments. The computer program may be solidified in the processor 801, in which case the processor 801 may be implemented by hardware.

In an implementation, the communication device 80 may include a circuit which may implement the sending or receiving or communicating function in the above method embodiments. The processor and transceiver described in the present disclosure may be implemented in an integrated circuit (IC), analogue IC, radio frequency integrated circuit (RFIC), mixed signal IC, application specific integrated circuit (ASIC), printed circuit board (PCB), electronic device or the like. The processor and transceiver may also be manufactured using various IC process technologies such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon-germanium (SiGe), gallium arsenide (GaAs) and so on.

The communication device described in the above embodiments may be a network device or a terminal (such as the first terminal in the aforementioned method embodiment), but the scope of the communication device described in the present disclosure is not limited thereto, and the structure of the communication device may not be limited by FIG. 8. The communication device may be a stand-alone device or may be part of a larger device. For example, the described communication device may be:
(1) a stand-alone integrated circuit IC, or chip, or chip system or subsystem;
(2) a set having one or more ICs, optionally the set of ICs may also include a storage component for storing data and computer program;
(3) an ASIC such as a modem;
(4) a module that may be embedded within other devices;
(5) a receiver, terminal, smart terminal, cellular phone, wireless device, handheld machine, mobile unit, in-vehicle device, network-side device, cloud device, artificial intelligence device, and the like;
(6) others.

A person skilled in the art may also appreciate that the various illustrative logical blocks and steps listed in the embodiments of the present disclosure may be implemented by electronic hardware, computer software, or a combination thereof. Whether such function is implemented by hardware or software depends on the particular application and the design requirement of the overall system. A person skilled in the art may use various methods to implement the described function for each particular application, but such implementation should not be construed as going beyond the protection scope of the embodiments of the present disclosure.

An embodiment of the present disclosure also provides a system of acquiring positioning data. The system includes the communication device as the terminal, the communication device as the base station, and the communication device as the core network device in the aforementioned embodiment of FIG. 7, or includes the communication device as the terminal, the communication device as the base station, and the communication device as the core network device in the aforementioned embodiment of FIG. 8.

The present disclosure also provides a readable storage medium having stored thereon instructions which, when being executed by a computer, implement the function in any of the foregoing method embodiments.

The present disclosure also provides a computer program product which, when being executed by a computer, implement the function in any of the above method embodiments.

The above embodiments may be wholly or partly implemented by software, hardware, firmware, or any combination thereof. When being implemented by software, it may be wholly or partly implemented in the form of a computer program product. The computer program product includes one or more computer programs. When the computer program is loaded and executed on a computer, the process or function according to the embodiments of the present disclosure is generated in whole or in part. The computer may be a general purpose computer, a special purpose computer, a computer network, or other programmable device. The computer program may be stored in a computer-readable storage medium or transmitted from a computer-readable storage medium to another computer-readable storage medium. For example, the computer program may be transmitted from a web site, computer, server, or data center to another website site, computer, server or data center via a wired (e.g., coaxial cable, fiber optic, and digital subscriber line (DSL)) or wireless (e.g., infrared, wireless, microwave, or the like) manner. The computer-readable storage medium may be any usable medium to which a computer can access or a data storage device such as a server, data center, etc. containing one or more usable media integrated. The usable medium may be a magnetic medium (e.g., floppy disk, hard disk, tape), an optical medium (e.g., a high-density digital video disc (DVD)), a semiconductor medium (e.g., a solid state disk (SSD)), or the like.

A person skilled in the art may understand that the first, second, and other various numerical numbers involved in the present disclosure are only for the purpose of distinguishing, and are not used to limit the scope of the embodiments of the present disclosure and denote a precedence order.

The "at least one of ..." in the present disclosure may also be described as "one or more", and "a plurality of ..." may be two, three, four, or more, which is not limited in the present disclosure. In an embodiment of the present disclosure, the terms "first", "second", "third", "A", "B", "C" and "D" may be used to differentiate technical features in a kind of technical feature, and the technical features described by the "first", "second", "third", "A", "B", "C" and "D" do not have a precedence order or a size order thereamong.

The correspondence shown in each table in the present disclosure may be configured or predefined. The value of the information in each table is only illustrative, and may be configured to be other values, which is not limited in the present disclosure. When configuring the correspondence between the information and a respective parameter, not all the correspondences illustrated in each table may be configured. For example, the correspondences shown in a certain row of the table in the present disclosure may also not be configured. For another example, the above tables may be adjusted with appropriate modifications, such as splitting, merging, and the like. The names of the parameters shown in the headings in the above-described tables may also be other names understandable by the communication device, and the values or representations of the parameters thereof may also be other values or representations understandable by the communication device. Each of the above tables may also be implemented using other data structures, such as an array, a queue, a container, a stack, a linear table, a pointer, a chained list, a tree, a graph, a structure, a class, a heap or a hash table.

"Predefined" in the present disclosure may be understood as defined, predefined, stored, pre-stored, pre-negotiated, pre-configured, cured, or pre-fired.

A person skilled in the art may appreciate that the units and algorithmic steps of the various examples described in conjunction with the embodiments disclosed herein can be implemented in electronic hardware, or a combination of computer software and electronic hardware. Whether these functions are executed in hardware or software depends on the particular application and design constraint of the technical solution. A person skilled in the art may use different methods to implement the described function for each particular application, but such implementations should not be considered as going beyond the scope of the present disclosure.

A person skilled in the art may clearly understand that for the convenience and brevity of the description, the specific working processes of the above-described system, device, and unit may refer to the corresponding processes in the foregoing method embodiments, which will not be repeated herein.

The above description is only a specific implementation of the present disclosure, and the protection scope of the present disclosure is not limited thereto. Any person skilled in the art may easily conceive of changes or substitutions within the scope of technology disclosed in the present disclosure, which shall fall within the protection scope of the present disclosure. Therefore, the protection scope of the present disclosure shall be subject to the protection scope of the claims.

## Claims

1. A method of acquiring positioning data, which is performed by a terminal, comprising:
sending a sounding reference signal, SRS, to a base station, the SRS being configured for the base station to acquire a measurement signal of the SRS;
acquiring a positioning coordinate of the terminal within a first time unit after sending the SRS; and
sending the positioning coordinate to a network device.

2. The method according to claim 1, wherein sending the SRS to the base station comprises:
receiving data collection configuration information sent by the network device, wherein the data collection configuration information comprises a relevant parameter for determining a transmission resource and a transmission time for the SRS; and
sending the SRS to the base station over the transmission resource according to each transmission time.

3. The method according to claim 1 or 2, wherein sending the positioning coordinate to the network device comprises:
adding a corresponding first identifier to the positioning coordinate, the first identifier having a mapping relationship with a second identifier corresponding to the measurement signal, and the second identifier being an identifier added by the base station to the measurement signal, wherein the first identifier and the second identifier are configured for the network device to pair the measurement signal and the positioning coordinate; and
sending the positioning coordinate and the first identifier to the network device.

4. The method according to claim 2, wherein
acquiring the positioning coordinate of the terminal within the first time unit after sending the SRS comprises:
acquiring the positioning coordinate of the terminal within the first time unit after sending the SRS of a first transmission time, and
sending the positioning coordinate to the network device comprises:
sending the positioning coordinate corresponding to the SRS of the first transmission time to the network device after sending the SRS of the first transmission time.

5. The method according to claim 2, wherein sending the positioning coordinate to the network device comprises:
sending, in a first order, the positioning coordinate corresponding to the SRS of each transmission time to the network device.

6. The method according to claim 5, wherein sending, in the first order, the positioning coordinate corresponding to the SRS of each transmission time to the network device comprises:
sorting the positioning coordinate corresponding to the SRS of each transmission time in a chronological order of each transmission time, and sending the sorted positioning coordinates together to the network device; or
sequentially sending the positioning coordinate corresponding to the SRS of each transmission time to the network device in the chronological order of each transmission time.

7. The method according to any one of claims 2 to 6, wherein
the first time unit is a time unit configured by the network device, and the data collection configuration information further comprises the first time unit; or
the first time unit is a time unit predefined by a protocol.

8. A method of acquiring positioning data, which is performed by a base station, comprising:
receiving a sounding reference signal, SRS, sent by a terminal, the SRS being configured for the terminal to acquire a positioning coordinate of the terminal within a first time unit after sending the SRS;
obtaining a measurement signal of the SRS by measuring the SRS, and storing the measurement signal; and
sending the stored measurement signal to a core network device, wherein the measurement signal is configured for the core network device to acquire the positioning data, and the positioning data comprises the measurement signal acquired by the base station and the positioning coordinate acquired by the terminal.

9. The method according to claim 8, further comprising:
sending data collection configuration information to the terminal, wherein the data collection configuration information comprises a relevant parameter for determining a transmission resource and a transmission time for the SRS, and the transmission resource and the transmission time are configured to instruct the terminal to send the SRS over the transmission resource according to each transmission time.

10. The method according to claim 8, wherein obtaining the measurement signal of the SRS by measuring the SRS, and storing the measurement signal comprises:
determining configuration information configured for the base station, the configuration information being configured to instruct the base station to measure the SRS and to store the measurement signal of the SRS; and
obtaining the measurement signal of the SRS by measuring the SRS and storing the measurement signal based on the configuration information.

11. The method according to any one of claims 8 to 10, wherein sending the stored measurement signal to the core network device comprises:
adding a corresponding second identifier to the stored measurement signal;
receiving the positioning coordinate and a first identifier corresponding to the positioning coordinate sent by the terminal, wherein the first identifier and the second identifier have a mapping relationship, and the first identifier is an identifier added by the terminal to the positioning coordinate;
pairing the measurement signal and the positioning coordinate corresponding to each other according to the first identifier and the second identifier; and
sending the measurement signal and the positioning coordinate paired with each other to the core network device.

12. The method according to any one of claims 8 to 10, wherein sending the stored measurement signal to the core network device comprises:
adding a corresponding second identifier to the stored measurement signal;
receiving the positioning coordinate and a first identifier corresponding to the positioning coordinate sent by the terminal; and
sending the stored measurement signal, the second identifier of the stored measurement signal, and the positioning coordinate and the first identifier of the positioning coordinate sent by the terminal to the core network device, wherein the first identifier and the second identifier are configured for the core network device to pair the measurement signal and the positioning coordinate.

13. The method according to any one of claims 8 to 10, wherein sending the stored measurement signal to the core network device comprises:
adding a corresponding second identifier to the stored measurement signal, wherein the second identifier and a first identifier corresponding to the positioning coordinate have a mapping relationship, the first identifier is an identifier added by the terminal to the positioning coordinate, the first identifier and the second identifier are configured for the core network device to pair the measurement signal and the positioning coordinate; and
sending the stored measurement signal and the second identifier of the stored measurement signal to the core network device.

14. The method according to claim 9, wherein sending the stored measurement signal to the core network device comprises:
receiving the positioning coordinate sent by the terminal, wherein the positioning coordinate sent by the terminal is a positioning coordinate acquired by the terminal after sending the SRS of a first transmission time; and
sending the stored measurement signal corresponding to the SRS of the first transmission time and the positioning coordinate sent by the terminal to the core network device.

15. The method according to claim 9, wherein sending the stored measurement signal to the core network device comprises:
sending, in a first order, the measurement signal corresponding to the SRS of each transmission time among the stored measurement signals to the core network device.

16. The method according to claim 15, wherein sending, in the first order, the measurement signal corresponding to the SRS of each transmission time among the stored measurement signals to the core network device comprises:
sorting the measurement signal corresponding to the SRS of each transmission time among the stored measurement signals in a chronological order of each transmission time, and sending the sorted measurement signals together to the core network device; or
sequentially sending the measurement signal corresponding to the SRS of each transmission time among the stored measurement signals to the core network in the chronological order of each transmission time.

17. The method according to any one of claims 9 to 16, wherein
the first time unit is a time unit configured by the network device, and the data collection configuration information further comprises the first time unit; or
the first time unit is a time unit predefined by a protocol.

18. A method of acquiring positioning data, which is performed by a core network device, comprising:
receiving a measurement signal and a positioning coordinate sent by a base station; or
receiving the measurement signal sent by the base station and the positioning coordinate sent by a terminal,
wherein the measurement signal is obtained by the base station measuring a sounding reference signal, SRS, sent by the terminal, and the positioning coordinate is acquired by the terminal within a first time unit after sending the SRS.

19. The method according to claim 18, wherein the first time unit is a time unit configured by a network device, or the first time unit is a time unit predefined by a protocol.

20. A communication device, comprising:
a transceiver module, configured to send a sounding reference signal, SRS, to a base station, the SRS being configured for the base station to acquire a measurement signal of the SRS; and
a processing module, configured to acquire a positioning coordinate of a terminal within a first time unit after sending the SRS,
the transceiver module is further configured to send the positioning coordinate to a network device.

21. A communication device, comprising:
a transceiver module, configured to receive a sounding reference signal (SRS) sent by a terminal, the SRS being configured for the terminal to acquire a positioning coordinate of the terminal within a first time unit after sending the SRS; and
a processing module, configured to obtain a measurement signal of the SRS by measuring the SRS, and to store the measurement signal,
the transceiver module is further configured to send the stored measurement signal to a core network device, wherein the measurement signal is configured for the core network device to acquire the positioning data, and the positioning data comprises the measurement signal acquired by a base station and the positioning coordinate acquired by the terminal.

22. A communication device, comprising a transceiver module, configured to:
receive a measurement signal and a positioning coordinate sent by a base station; or
receive the measurement signal sent by the base station and the positioning coordinate sent by a terminal,
wherein the measurement signal is obtained by the base station measuring a sounding reference signal (SRS) sent by the terminal, and the positioning coordinate is acquired by the terminal within a first time unit after sending the SRS.

23. A communication device, comprising a processor and a memory, the memory having a computer program stored therein, and the processor executing the computer program stored in the memory to cause the communication device to implement the method according to any one of claims 1 to 7.

24. A communication device, comprising a processor and a memory, the memory having a computer program stored therein, and the processor executing the computer program stored in the memory to cause the communication device to implement the method according to any one of claims 8 to 17.

25. A communication device, comprising a processor and a memory, the memory having a computer program stored therein, and the processor executing the computer program stored in the memory to cause the communication device to implement the method according to claim 18 or 19.

26. A computer readable storage medium having instructions stored thereon that, when being executed by a processor, implement the method according to any one of claims 1 to 7.

27. A computer readable storage medium having instructions stored thereon that, when being executed by a processor, implement the method according to any one of claims 8 to 17.

28. A computer readable storage medium having instructions stored thereon that, when being executed by a processor, implement the method according to claim 18 or 19.
